# EUROPEAN PATENT APPLICATION

(11) **EP 3 576 271 A1**
(43) Date of publication of application: **04.12.2019**
(21) Application number: 18175475.5
(22) Date of filing: 01.06.2018
(51) Int. Cl.: H02M 1/08, H02J 5/00, H02M 7/219, H02J 7/00, H02J 7/02

(54) **DC CHARGING SYSTEM FOR STORAGE BATTERY OF ELECTRIC VEHICLE**

(71) Applicant: Xue, Luoliang, Zhenghou City, Henan (CN); Xue, Chan, Zhengzhou City, Henan (CN)
(72) Inventor: Xue, Luoliang, Zhenghou City, Henan (CN); Xue, Chan, Zhengzhou City, Henan (CN)
(74) Representative: ABG Intellectual Property Law, S.L.

(57) **Abstract**

The present invention discloses a direct-current (DC) charging system for a storage battery of an electric vehicle. The charging system includes a distribution transformer and a DC charging pile. The DC charging pile includes a charging pile controller and a step-down high-frequency PWM rectification filter circuit. The primary high-voltage side of the distribution transformer is connected to a public medium-voltage distribution network; the secondary low-voltage side is connected to an input end of the step-down (Buck) high-frequency PWM rectification filter circuit; and an output end of the step-down high-frequency PWM rectification filter circuit is connected to a charge interface of the DC charging pile. A positive output end of the rectifier bridge is connected to a negative electrode of the flyback diode and one end of the energy storage inductor, the other end of the energy storage inductor is connected to a positive electrode of the filter capacitor, and a negative output end of the rectifier bridge is connected to a positive electrode of the flyback diode and a negative electrode of the filter capacitor. The output end of the charging pile controller is connected to the switch transistors. The present invention can reduce complexity of the structure and circuits of a charging pile, and decrease the energy consumption of the device, thus reducing the costs.

## Description

### TECHNICAL FIELD

The present invention relates to the field of storage battery rapid charging technology, and in particular, to a direct-current (DC) charging system for a storage battery of an electric vehicle.

### BACKGROUND

A DC charging device is required so as to meet a rapid charging requirement for a storage battery of an electric vehicle. At present, a DC charging pile uses a switching power supply. Affected by properties of electronic components, an individual switching power supply has a relatively small capacity, failing to meet the rapid charging requirement for a large-capacity storage battery. Therefore, a conventional DC charging pile is formed by multiple parallel-connected switching power supplies, and a control device distributes power among the parallel-connected switching power supplies according to the storage battery charging requirement. The switching power supply uses Boost rectification to electrically isolate inputs and outputs with a high-frequency transformer. The foregoing device uses a lot of power electronic components of which the wiring is complex, and has high energy consumption, resulting in high costs.

### SUMMARY

An objective of the present invention is to provide a DC charging system for a storage battery of an electric vehicle, which can reduce complexity of the structure and circuits of a charging pile, and decrease the energy consumption of the device, thus reducing the costs.

To achieve the above purpose, the present invention provides the following solution.
A DC charging system for a storage battery of an electric vehicle includes a distribution transformer and a DC charging pile, where
the distribution transformer includes a primary high-voltage side and a secondary low-voltage side, and the DC charging pile includes a charging pile controller and a step-down high-frequency PWM rectification filter circuit;
the step-down high-frequency PWM rectification filter circuit includes a filter, a rectifier bridge, and a filter loop, the filter including a filter inductor and an energy storage capacitor; the rectifier bridge including six rectifier arms and each rectifier arm being formed by connecting a switch transistor in series with a diode; and the filter loop including a flyback diode, an energy storage inductor and a filter capacitor;
the primary high-voltage side is connected to a public medium-voltage distribution network; the secondary low-voltage side is connected to an input end of the step-down high-frequency PWM rectification filter circuit, to supply power to the step-down high-frequency PWM rectification filter circuit; and an output end of the step-down high-frequency PWM rectification filter circuit is connected to a charge interface of the DC charging pile;
a positive output end of the rectifier bridge is connected to a negative electrode of the flyback diode and one end of the energy storage inductor, the other end of the energy storage inductor is connected to a positive electrode of the filter capacitor, and a negative output end of the rectifier bridge is connected to a positive electrode of the flyback diode and a negative electrode of the filter capacitor; and
an output end of the charging pile controller is connected to the switch transistors by means of isolation drive, to control switch-on/switch-off of the switch transistors in the step-down high-frequency PWM rectification filter circuit.

Alternatively, the output end of the charging pile controller is connected to gate electrodes of the switch transistors.
Alternatively, the secondary low-voltage side is provided with at least one three-phase secondary winding.

Alternatively, a voltage of the low-voltage side of the three-phase secondary winding equals to a non-standard voltage value.
According to specific embodiments provided in the present invention, the present invention discloses the following technical effects:
The present invention provides a DC charging system for a storage battery of an electric vehicle, which uses a combination of a distribution transformer and a step-down high-frequency PWM rectification filter circuit, and avoids the use of a high-frequency transformer for a switching power supply, thus decreasing the number of components and reducing investment on a charging device. A voltage input to the step-down high-frequency PWM rectification filter circuit is relatively high, such that the current through the switch transistor and the diode loop is reduced, thus reducing the energy consumption of the device. Moreover, a capacity can be expanded by connecting multiple groups of rectifier circuits (Buck) in parallel.

### BRIEF DESCRIPTION OF THE DRAWINGS

To describe the technical solutions in the embodiments of the present invention or in the prior art more clearly, the following briefly describes the accompanying drawings required for describing the embodiments. Apparently, the accompanying drawings in the following description show some embodiments of the present invention, and a person of ordinary skill in the art may still derive other drawings from these accompanying drawings without creative efforts.

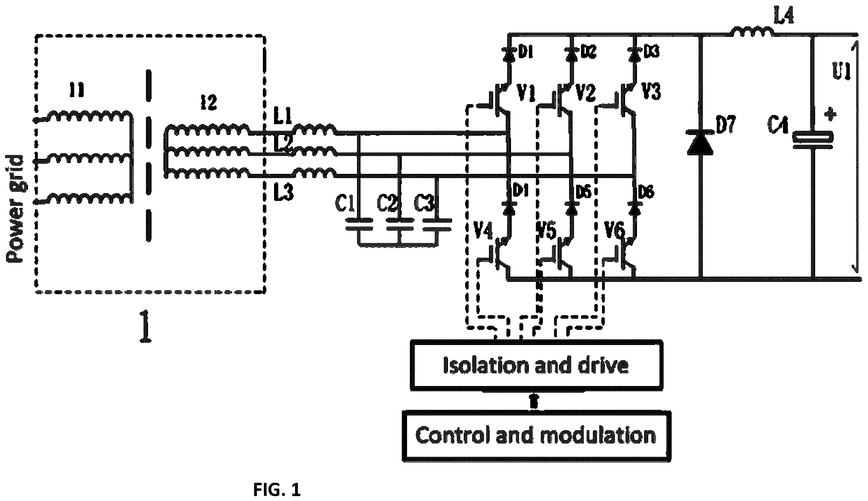

FIG. 1 is a schematic structural diagram of a DC charging system for a storage battery of an electrical vehicle according to Embodiment 1 of the present invention.

### DETAILED DESCRIPTION

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

An objective of the present invention is to provide a DC charging system for a storage battery of an electric vehicle, which can reduce complexity of the structure and circuits of a charging pile, and decrease the energy consumption of the device, thus reducing the costs.

To make the foregoing objective, features, and advantages of the present invention clearer and more comprehensible, the present invention is further described in detail below with reference to the accompanying drawings and specific embodiments.
FIG. 1 is a schematic structural diagram of a DC charging system for a storage battery of an electrical vehicle according to Embodiment 1 of the present invention. As shown in FIG. 1, the DC charging system for a storage battery of an electrical vehicle includes a distribution transformer and a DC charging pile.

The distribution transformer 1 includes a primary high-voltage side 11 and a secondary low-voltage side 12, and the DC charging pile includes a charging pile controller and a step-down high-frequency PWM rectification filter circuit.

The step-down high-frequency PWM rectification filter circuit includes a filter, a rectifier bridge, and a filter loop. The filter includes filter inductors L1, L2, and L3 and energy storage capacitors C1, C2, and C3. The rectifier bridge includes six rectifier arms and each rectifier arm is formed by connecting a switch transistor in series with a rectifier diode. The filter loop includes a flyback diode D7, an energy storage inductor L4 and a filter capacitor C4.

The primary high-voltage side 11 is connected to a public medium-voltage distribution network. The secondary low-voltage side 12 is connected to an input end of the step-down high-frequency PWM rectification filter circuit, to supply power to the step-down high-frequency PWM rectification filter circuit; and an output end of the step-down high-frequency PWM rectification filter circuit is connected to a charge interface of the DC charging pile.

A positive output end of the rectifier bridge is connected to a negative electrode of the flyback diode D7 and one end of the energy storage inductor L4, and the other end of the energy storage inductor L4 is connected to a positive electrode of the filter capacitor C4. A negative output end of the rectifier bridge is connected to a positive electrode of the flyback diode D7 and a negative electrode of the filter capacitor C4. An output end of the charging pile controller is connected to the switch transistors V1, V2, V3, V4, V5 and V6 via an isolation-driven loop, to control switch-on/switch-off of the switch transistors V1, V2, V3, V4, V5 and V6 in the step-down high-frequency PWM rectification filter circuit.

The output end of the charging pile controller is connected to gate electrodes of the switch transistors V1, V2, V3, V4, V5, and V6 by means of isolation drive.

The secondary low-voltage side 12 is provided with at least one three-phase secondary winding.

A voltage of the low-voltage side of the three-phase secondary winding equals to a non-standard voltage value.

Embodiment 1: One three-phase secondary winding is set on the secondary low-voltage side 12 of the distribution transformer. There are a plurality of DC charging piles. The non-standard voltage value output by the secondary low-voltage side 12 can simultaneously meet a storage battery charging requirement, a power factor control requirement, and a grid voltage fluctuation requirement of 15%. A modulation wave output by the charging pile controller controls gate electrodes of the switch transistors V1, V2, V3, V4, V5 and V6. The magnitude of an output current of a rectifier circuit and an input power factor are controlled through PWM modulation. The filter circuit makes a current ripple achieve the storage battery charging requirement of the electric vehicle. Specifically, the charging pile controller modulates the carrier pulse width according to a storage battery charging policy and a power factor control requirement, to control switch-on/switch-off of the switch transistors V1, V2, V3, V4, V5 and V6 in the rectifier circuit. The whole DC charging system device charges the storage battery of the electric vehicle via an output terminal U1.

Embodiment 2: A difference between this embodiment and Embodiment 1 is that, a plurality of three-phase secondary windings is set on the secondary low-voltage side 12 of the distribution transformer. The number of the DC charging piles is the same as that of the three-phase secondary windings. Other content is identical with that in Embodiment 1.

The present invention uses a combination of a step-down (Buck) high-frequency PWM rectifier device and a dedicated distribution transformer 1. A voltage of a low-voltage side of the distribution transformer equals to a non-standard voltage value, and is used to supply power to the step-down (Buck) high-frequency PWM rectifier device. The voltage value simultaneously meets a storage battery charging requirement, a power factor control requirement, and a grid voltage fluctuation requirement of 15%. A charging current is output after rectification and filtering on the current at the low-voltage side of the distribution transformer, and thus the use of a high-frequency transformer for a switching power supply is avoided, decreasing the number of components and reducing investment on a charging device. A voltage input to the high-frequency PWM rectification circuit (Buck) is relatively high, such that the current through the switch transistors and a diode loop is reduced at the same power, thus reducing the energy consumption of the device. Moreover, a capacity can be expanded by connecting multiple groups of rectifier circuits (Buck) in parallel, and thus the structure of the charging pile can be simplified and the complexity of the circuits can be reduced, reducing the investment on pile construction.

Several examples are used for illustration of the principles and implementation methods of the present invention. The description of the embodiments is used to help illustrate the method and its core principles of the present invention. In addition, those skilled in the art can make various modifications in terms of specific embodiments and scope of application in accordance with the teachings of the present invention. In conclusion, the content of this specification shall not be construed as a limitation to the invention.

## Claims

1. A direct-current (DC) charging system for a storage battery of an electric vehicle, comprising a distribution transformer and a DC charging pile, wherein
the distribution transformer comprises a primary high-voltage side and a secondary low-voltage side, and the DC charging pile comprises a charging pile controller and a step-down high-frequency PWM rectification filter circuit;
the step-down high-frequency PWM rectification filter circuit comprises a filter, a rectifier bridge, and a filter loop, the filter comprising a filter inductor and an energy storage capacitor; the rectifier bridge comprising six rectifier arms and each rectifier arm being formed by connecting a switch transistor in series with a diode; and the filter loop comprising a flyback diode, an energy storage inductor and a filter capacitor; the primary high-voltage side of the distribution transformer is connected to a public medium-voltage distribution network; the secondary low-voltage side is connected to an input end of the step-down high-frequency PWM rectification filter circuit, to supply power to the step-down high-frequency PWM rectification filter circuit; and an output end of the step-down high-frequency PWM rectification filter circuit is connected to a charge interface of the DC charging pile; and
an output end of the charging pile controller is connected to the switch transistors by means of isolation drive, to control switch-on/switch-off of the switch transistors in the step-down high-frequency PWM rectification filter circuit.

2. The DC charging system for a storage battery of an electric vehicle according to claim 1, wherein the output end of the charging pile controller is connected to gate electrodes of the switch transistors by means of isolation drive.

3. The DC charging system for a storage battery of an electric vehicle according to claim 1, wherein a positive output end of the rectifier bridge is connected to a negative electrode of the flyback diode and one end of the energy storage inductor, the other end of the energy storage inductor is connected to a positive electrode of the filter capacitor, and a negative output end of the rectifier bridge is connected to a positive electrode of the flyback diode and a negative electrode of the filter capacitor.

4. The DC charging system for a storage battery of an electric vehicle according to claim 1, wherein the secondary low-voltage side is provided with at least one three-phase secondary winding.

5. The DC charging system for a storage battery of an electric vehicle according to claim 4, wherein a voltage of the low-voltage side of the three-phase secondary winding equals to a non-standard voltage value that simultaneously meets a storage battery charging requirement, a power factor control requirement, and a grid voltage fluctuation requirement of 15%.
